(19) **Europäisches Patentamt European Patent Office Office européen des brevets**

(11) **EP 4 305 518 B1**

(12) **EUROPEAN PATENT SPECIFICATION**

(45) Date of publication and mention
of the grant of the patent:
**25.06.2025 Bulletin 2025/26**

(21) Application number: **22725443.0**

(22) Date of filing: **25.04.2022**

(51) International Patent Classification (IPC):
**G06F 7/48** *(2006.01)*    **G06F 7/72** *(2006.01)*

(52) Cooperative Patent Classification (CPC):
**G06F 7/4806; G06F 7/72**

(86) International application number:
**PCT/EP2022/060901**

(87) International publication number:
**WO 2022/229103 (03.11.2022 Gazette 2022/44)**

(54) **COMPUTER-IMPLEMENTED METHOD FOR DETERMINING A GAUSSIAN INTEGER CONGRUENT TO A GIVEN GAUSSIAN INTEGER MODULO A GAUSSIAN INTEGER MODULUS, METHOD FOR DETERMINING A REDUCTION OF A GIVEN GAUSSIAN INTEGER MODULO A GAUSSIAN INTEGER MODULUS AND CRYPTOGRAPHIC METHOD AND ERROR-CORRECTION METHOD**

COMPUTERIMPLEMENTIERTES VERFAHREN ZUR BESTIMMUNG EINER GAUSSSCHEN GANZZAHL, DIE MIT EINER BESTIMMTEN GAUSSSCHEN GANZZAHL MODULO EINES GAUSSSCHEN GANZZAHLMODULS KONGRUENT IST, VERFAHREN ZUR BESTIMMUNG EINER REDUKTION EINER BESTIMMTEN GAUSSSCHEN GANZZAHL MODULO EINES GAUSSSCHEN GANZZAHLMODULS UND KRYPTOGRAFISCHES VERFAHREN UND FEHLERKORREKTURVERFAHREN

PROCÉDÉ MIS EN  UVRE PAR ORDINATEUR POUR DÉTERMINER UN ENTIER GAUSSIEN CONGRUENT À UN ENTIER GAUSSIEN DONNÉ MODULO UN MODULE D'ENTIER GAUSSIEN, PROCÉDÉ POUR DÉTERMINER UNE RÉDUCTION D'UN ENTIER GAUSSIEN DONNÉ MODULO UN MODULE D'ENTIER GAUSSIEN ET PROCÉDÉ CRYPTOGRAPHIQUE ET PROCÉDÉ DE CORRECTION D'ERREURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2021 DE 102021204379**
**14.05.2021 DE 102021204916**
**07.06.2021 EP 21178084**

(43) Date of publication of application:
**17.01.2024 Bulletin 2024/03**

(73) Proprietor: **Siemens Aktiengesellschaft**
**80333 München (DE)**

(72) Inventors:
• **DE SANTIS, Fabrizio**
**80634 München (DE)**

• **SAFIEH, Malek**
**81539 München (DE)**

(74) Representative: **Siemens Patent Attorneys**
**Postfach 22 16 34**
**80506 München (DE)**

(56) References cited:
• **SAFIEH MALEK ET AL: "Montgomery Modular Arithmetic over Gaussian Integers", 2020 24TH INTERNATIONAL CONFERENCE ON INFORMATION TECHNOLOGY (IT), IEEE, 18 February 2020 (2020-02-18), pages 1 - 4, XP033759570, DOI: 10.1109/ IT48810.2020.9070297**

**(Cont. next page)**

- SAFIEH MALEK ET AL: "A Compact Coprocessor for the Elliptic Curve Point Multiplication over Gaussian Integers", ELECTRONICS, vol. 9, no. 12, 2 December 2020 (2020-12-02), pages 2050, XP055857030, DOI: 10.3390/electronics9122050
- FREUDENBERGER JURGEN ET AL: "New Coding Techniques for Codes over Gaussian Integers", IEEE TRANSACTIONS ON COMMUNICATIONS, IEEE SERVICE CENTER, PISCATAWAY, NJ. USA, vol. 61, no. 8, 1 August 2013 (2013-08-01), pages 3114 - 3124, XP011524422, ISSN: 0090-6778, [retrieved on 20130820], DOI: 10.1109/ TCOMM.2013.061913.120742
- CONRAD KEITH: "THE GAUSSIAN INTEGERS", 1 January 2013 (2013-01-01), XP055856995, Retrieved from the Internet <URL:https:// kconrad.math.uconn.edu/blurbs/ugradnumthy/ Zinotes.pdf> [retrieved on 20211102]

**Description**

Computer-implemented method for determining a Gaussian integer congruent to a given Gaussian integer modulo a Gaussian integer modulus, method for determining a reduction of a given Gaussian integer modulo a Gaussian integer modulus and cryptographic method and error-correction method
The invention relates to a computer-implemented method for determining a Gaussian integer congruent to a given Gaussian integer modulo a Gaussian integer modulus and to a method for a complete modulo reduction of a given Gaussian integer with a Gaussian integer modulus. The invention furthermore relates to a computer-implemented cryptographic method and to a computer-implemented error-correction method.

Gaussian integers are a subset of the complex numbers having integers as real and imaginary parts. The set of Gaussian integers together with addition and multiplication modulo a Gaussian integer modulus forms either a ring or a field depending on the choice of the modulus. For this reason, Gaussian integers find applications in error-correcting coding theory, cryptography, and other fields of sciences.

For example, the set of Gaussian integers with addition and multiplication modulo a Gaussian integer modulus $\pi$ forms a finite Gaussian integer field, if $\pi\pi^*=p$ is prime and thus an ordinary integer. Note that the notion $\pi^*$ denotes the complex conjugate of $\pi$. In this case, the resulting Gaussian integer field is isomorphic to the prime field GF($p$) over ordinary integers. Such an isomorphism exists for any prime $p$ congruent to 1 modulo 4.

Like for the case of ordinary integers, the straightforward implementation of a modulo reduction of a given Gaussian integer is typically quite inefficient, because it requires a division of a Gaussian integer followed by a rounding of the result. Hence, more efficient reduction mechanisms for Gaussian integers are needed.

In the fields of cryptography and error-correction codes, congruent solutions with a smaller norm or absolute value than the original given Gaussian integer are heavily used and typically computed relatively inefficient.

The current invention aims at providing a method for an efficient reduction of a given Gaussian integer with a Gaussian integer modulus. Likewise, also a method for determining a Gaussian integer congruent to a given Gaussian integer modulo a Gaussian integer modulus with reduced complexity would be beneficial for many applications. Cryptographic methods and error-correction methods would significantly benefit from efficient reduction methods as mentioned above and are highly desired.

The problem of this invention is solved with a computer-implemented method for determining a Gaussian integer congruent to a given Gaussian integer modulo a Gaussian integer modulus having the features contained in claim 1, with a method for a reduction of a given Gaussian integer with a Gaussian integer modulus having the features contained in claim 13 and with a computer-implemented cryptographic method having the features contained in claim 14 and with a computer-implemented error-correction method having the features contained in claim 15.

Preferred and advantageous aspects of the invention are contained in the respective dependent claims and the subsequent description.

The main idea of the current invention is to provide an efficient reduction method for a class of Gaussian integer moduli of special form that boils down to a sequence of elementary bit operations, hence providing a very fast way to implement modulo reduction (both software and hardware) for a large class of Gaussian integer moduli.

A classic and direct approach for a modulo reduction of a given Gaussian integer $x$ modulo a Gaussian integer modulus $\pi$ uses a subtraction, a multiplication by a constant, and a division with rounding, like shown in the following formula:

$$x \bmod \pi = x - [(x\pi^*)/(\pi\pi^*)]\cdot\pi.$$

Again, the notion $\pi^*$ denotes the complex conjugate of $\pi$, and the square brackets denote the operation of rounding.

A more efficient method for performing a modulo reduction of a given Gaussian integer modulo a Gaussian integer modulus is described in the following article: Safieh, Malek; Freudenberger, Jürgen: "Montgomery Reduction for Gaussian Integers", Cryptography 2021, 5, 6 (https://doi.org/10.3390/cryptography5010006).

Likewise, fast reduction methods for a special class of ordinary integers are known. However, efficient reduction methods for Gaussian integers are less developed. Thus, the invention in a particularly advantageous aspect addresses the important use case of given Gaussian integers, which are not ordinary integers.

According to this invention, the modulo reduction may be performed in two parts: in a first part, a Gaussian integer congruent replacing the given Gaussian integer is determined, which is smaller than the given Gaussian integer, with respect to a norm such as the absolute value, but congruent to a final reduced result. In a second part, the congruent result may be reduced to obtain the final result of the modulo reduction, which is the correct representative from the Gaussian integer ring or field. Both aspects, the determination of the Gaussian integer congruent and the complete reduction, are subject of the current invention.

In this invention an efficient algorithm for the modulo reduction of given Gaussian integers in two parts as described above is disclosed. The first part is new and leads to different algorithmic steps and arithmetic operations than those described in prior art. This first part may be combined with a second part known from Safieh, Malek; Freudenberger, Jürgen: "Montgomery Reduction for Gaussian Integers", Cryptography 2021, 5, 6 (https://doi.org/10.3390/cryptography5010006) as steps 3 to 11 of Algorithm 2 which constitute prior art.

Both the first and the second part may be combined to perform a full modulo reduction. However, in practice the first part is performed more frequently, particularly during cryptographic computations, while the second part, that may be also referred to as the "*final reduction*" throughout this application, is performed only once at the end to obtain the final desired result, the so-called representative of the Gaussian integer ring or field, which is the result from a modulo reduction. Moreover, the second part is based on computationally intensive comparisons. Thus, the first part aims at reducing the number of these comparisons to decrease the total complexity.

Thus, particularly the novel part of determining a Gaussian integer congruent to a given Gaussian integer modulo a Gaussian integer modulus provides major benefits in the efficiency of modulo reductions of Gaussian integers. Furthermore, it enables a final reduction with reduced complexity, i.e., the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006).

The computer-implemented method according to the invention is a method for determining a Gaussian integer congruent to a given Gaussian integer modulo a Gaussian integer modulus.

In the method according to the invention, a Gaussian integer base raised to an integer exponent is chosen, such that the Gaussian integer base raised to the integer exponent has a norm that is smaller or equal to the corresponding norm of the Gaussian integer modulus, and that is larger than the corresponding norm of the difference of the Gaussian integer base raised to the integer exponent and the Gaussian integer modulus. Later on, particularly in the description of preferred embodiments, the difference of the Gaussian integer base raised to the integer exponent and the Gaussian integer modulus may be denoted as $\varepsilon$.

In the method according to the invention, a variable value candidate for the Gaussian integer congruent is considered that is first initialized with the given Gaussian integer and then iteratively decremented by a product of the Gaussian integer modulus and a quotient, which is a component-wisely down rounded quotient of the current variable value candidate for the Gaussian integer congruent and the Gaussian integer base raised to the integer exponent, as long as the quotient is not vanishing. Hereafter, the resulting variable value candidate for the Gaussian integer congruent determines the Gaussian integer congruent with reduced norm or absolute value, which directly enables the use of the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006).

In this context, the wording "Gaussian integer congruent" denotes a Gaussian integer which is congruent to a given Gaussian integer modulo a Gaussian integer modulus. The invention may also be directed to the goal of determining such a Gaussian integer congruent, that has a norm that is smaller than the norm of the given Gaussian integer. Determining such a Gaussian integer congruent directly enables the use of the final reduction presented as steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006).

Thus, in a particular aspect of the invention, the Gaussian integer congruent determined with the method according to the invention has a norm that is smaller than the norm of the given Gaussian integer.

Throughout this application, the terms mentioned below have the following meaning:

The term Gaussian integer modulus denotes a complex modulus, that has an integer real part and an integer imaginary part. In general, the invention is applicable to many Gaussian integer moduli of special form. However, in an advantageous and preferred aspect of the invention, the invention is applied to such a Gaussian integer modulus that is not an ordinary integer. Later on, particularly in the description of preferred embodiments, the Gaussian integer modulus may also be denoted as $\pi$.

Throughout this application, the term given Gaussian integer refers to Gaussian integers, thus including ordinary integers. The given Gaussian integer may be denoted as $z'$ and may initialize the variable value candidate in what follows, particularly in the description of preferred embodiments.

Throughout this application, the term Gaussian integer base raised to an integer exponent refers to a base, that is a Gaussian integer and that is raised to an exponent, which is an integer. Please note, that in general the Gaussian integer representing the Gaussian integer base that is raised to the integer exponent may be different from the given Gaussian integer mentioned previously and is called Gaussian integer base in what follows. Later on, particularly in the description of preferred embodiments, the Gaussian integer base is denoted as $\beta$ and the integer exponent may be denoted by $n$. Accordingly, the Gaussian integer base raised to the integer exponent is denoted as $\beta^n$. In one preferred and advantageous aspect of the invention, the Gaussian integer base may be a Gaussian integer that is not an ordinary integer. In an alternative and also advantageous aspect of the invention, the Gaussian integer base may be an ordinary integer.

Throughout this application, the term variable value candidate for the congruent denotes a candidate for the congruent, that can take temporary and changing Gaussian integer values during the determination according to the method according to the invention. However, the variable value candidate is - after completing each iteration of decrementing the variable value candidate by the product of the Gaussian integer modulus and the component-wisely down rounded quotient of the current variable value candidate for the Gaussian integer congruent and the Gaussian integer base raised to the integer exponent - always congruent to the given Gaussian integer modulo the Gaussian integer modulus. Later, the variable value candidate for the congruent may be denoted by z', particularly in the description of preferred embodiments.

It is understood, that the phrase "variable value candidate that is decremented by" a quantity means that this quantity is subtracted from the variable value candidate.

The method according to the invention allows a more efficient determination of a Gaussian integer congruent to a given Gaussian integer modulo a Gaussian integer modulus. Advantageously, the step of iteratively decrementing the variable value candidate by the product of the Gaussian integer modulus and the component-wisely down rounded quotient of the current variable value candidate for the Gaussian integer congruent and the Gaussian integer base raised to the integer exponent can be performed computationally efficient with truncations and digit shifts.

In the method according to the invention as described above, a Gaussian integer base raised to an integer exponent is chosen such, that the Gaussian integer base raised to the integer exponent has a norm that is smaller or equal to the corresponding norm of the Gaussian integer modulus, and that is larger than the corresponding norm of the difference of the Gaussian integer base raised to the integer exponent and the Gaussian integer modulus. It is understood, that this step of the method may also optionally be rephrased such that a Gaussian integer base raised to an integer exponent having a norm smaller than or equal to that of the Gaussian integer modulus and larger than the norm of the difference of the Gaussian integer base raised to the integer exponent and the Gaussian integer modulus is considered. In other words, considering a Gaussian integer base raised to an integer exponent that satisfies the mentioned condition may preferably be rephrased as choosing a Gaussian integer base raised to an integer exponent that satisfies the mentioned condition.

In a preferred and advantageous aspect of the invention, the norm denotes the absolute value. Hence, in this aspect of the invention, the norm of the variable value candidate means the absolute value of the variable value candidate and the norm of the given Gaussian integer means the absolute value of the given Gaussian integer. In alternative advantageous aspects of the invention, other norms may be used, particularly the Manhattan weight or the absolute square value of the variable value candidate.

In a preferred aspect of the method according to the invention, the method is conducted on a computer that stores numbers in a positional numeral system with a radix, the radix being equal to the Gaussian integer base that, in this aspect of the invention, constitutes an ordinary integer base. In this aspect of the invention, the radix of the positional numeral system directly matches the Gaussian integer base. Hence, many operations in this algorithm may be conducted with positional shifts of digits in the positional numeral system. In this particularly useful aspect of the invention, the computational benefits which the invention provides are directly used and appropriated when conducting the method.

In a particular beneficial aspect of the method according to the invention the Gaussian integer base is an ordinary integer, particularly 2. Thus, the method is directly applicable in computers that store numbers as binary numbers. Since this positional numeral system is widely used in the computational domain, particularly this aspect of the invention addresses almost all computational architectures currently available.

In a preferred aspect of the invention, the variable value candidate is decremented with subtracting a product of the Gaussian integer base raised to the integer exponent and the component-wisely down rounded quotient of the current value of the variable value candidate and the Gaussian integer base raised to the integer exponent. This operation may be performed particularly efficient since the down rounded quotient of the current value of the variable value candidate may be evaluated with a shift of digits to the right direction. In this aspect, the integer exponent, the Gaussian integer base is raised to, is the number of digits that the variable value candidate is shifted by to evaluate the quotient. For the Gaussian integer base being 2 and a binary numeral system with integer powers of the Gaussian integer base being equal to 2, this operation may be performed with low computational costs by applying conventional bit shifts to the right by a number of digits, that match the integer exponent. Whenever throughout the application the wording integer exponent is used, this term refers to the integer exponent, the Gaussian base number is raised to.

In other words, in this aspect of the invention, subtracting the product of the Gaussian integer base raised to the integer exponent and the component-wisely down rounded quotient of the current value of the variable value candidate and the Gaussian integer base raised to the integer exponent from the variable value candidate is equivalent to a truncation of the current value of the variable value candidate down to the right-most digits, the number of the right-most digits being the integer exponent the Gaussian integer base is raised to.

The component-wise down rounding of the quotient may be easily achieved by applying digit shifts to the right direction, respectively.

In a likewise preferred aspect of the method according to the invention, the variable value candidate is iterative decremented with adding a product of the component-wisely down rounded quotient of the variable value candidate and the Gaussian integer base raised to the integer exponent and the difference of the Gaussian integer base raised to the integer exponent and the Gaussian integer modulus. This difference of the Gaussian integer base raised to the integer exponent and the Gaussian integer modulus is also denoted as $\varepsilon$ in what follows, particularly in the description of preferred embodiments of the invention.

In general, the evaluation of the product of the difference of the Gaussian integer base raised to the integer exponent and the Gaussian integer modulus and the component-wisely down rounded quotient of the current value of the variable value candidate for the Gaussian integer congruent and the Gaussian integer base raised to the integer exponent involves a complex multiplication which may not induce much computational costs in case the aforementioned difference of the Gaussian integer base raised to the integer exponent and the Gaussian integer modulus is comparatively small.

In a further and advantageous aspect of the method according to the invention, the decrementing of the variable value candidate of the Gaussian integer congruent involves bit shifting by an integer number of bits that is equal to the integer exponent of the Gaussian integer base to the integer exponent and involves bit truncation down to an integer number of bits that is equal to the integer exponent. Later on, this operation is denoted as $z' - q\beta^n$. As described in the previous aspects of the invention, many advantageous operations in the application of the method involve bit shifts and bit truncations, if performed on a conventional binary computer system.

In a further advantageous aspect of the method according to the invention, such a Gaussian integer modulus is considered, that the difference of the Gaussian integer base raised to the integer exponent and the Gaussian integer modulus is composed of a sum of a first further Gaussian integer base raised to a first integer superscript and the further Gaussian integer base raised to a second integer superscript multiplied with the imaginary unit. In this aspect of the invention, additional steps of the calculation may be conducted using computationally efficient calculus such as digit shifts. The first superscript may be denoted as $r$ and the second superscript may be denoted as $j$ in what follows.

The term "integer superscript" throughout this application means an "integer exponent" that is not necessarily equal to integer exponents mentioned previously in the application. Hence, in order to avoid confusion with previously mentioned integer exponents, the term integer superscript is used as an alternative term for such additionally introduced integer exponents.

In a particularly advantageous aspect of the method according to the invention, the Gaussian integer modulus is a Gaussian integer modulus, where the multiplication of this modulus with its conjugate is a prime ordinary integer. This particular case is of specific importance for cryptography, such as for generating cryptographic keys and for encryption or decryption, since Gaussian integer fields are considered in this case.

In a preferred method according to the invention, the Gaussian integer base is a sum of an additional ordinary integer raised to a third integer superscript and the product of the additional ordinary integer raised to the third integer superscript with the imaginary unit and the difference of the Gaussian integer base to the integer exponent and the Gaussian integer modulus is an ordinary integer or an additional Gaussian integer. Later on, particularly in the description of preferred embodiments, the third superscript may also be denoted as $k$. In this particular aspect of the invention, the evaluation of the component-wisely down rounded quotient may be evaluated computationally efficient with digit shifts to the left-hand side in conventional numeral notation.

In this advantageous aspect of the invention, for binary numeral systems and even in case the aforementioned difference of the Gaussian integer base raised to the integer exponent and the Gaussian integer modulus is not a power of two or a sum of a power of two and a product of a further power of two and the imaginary unit, calculating the product of the component wisely down rounded quotient of the current value of the variable value candidate for the Gaussian integer congruent and the Gaussian integer congruent may be performed with applying bit shifts.

The first, second, and third integer superscripts as mentioned previously denote further integer exponents which are not necessarily identical to the integer exponent introduced previously in the description.

In the particular case, wherein the difference of the Gaussian integer base raised to the integer exponent and the Gaussian integer modulus is the sum of an additional ordinary integer base raised to a first integer superscript and the additional ordinary integer base raised to the second integer superscript, and wherein the Gaussian integer base is the sum of the additional ordinary integer base raised to the third superscript and the product of the additional ordinary integer base raised to the third superscript and the imaginary unit, the calculation necessary for the method according to the invention is particularly efficient: The evaluation of the product of the down rounded quotient of the current value of the variable value candidate for the Gaussian integer congruent and the Gaussian integer base raised to the integer exponent and the Gaussian integer base raised to the integer exponent involves only a truncation. Additionally, the evaluation of the product of the down rounded quotient of the current value of the variable value candidate for the Gaussian integer congruent and the Gaussian integer base raised to the integer exponent and the difference of the Gaussian integer base raised to the integer exponent and the Gaussian integer modulus only requires bit shifts to the left.

In the computer-implemented method for a reduction of a given Gaussian integer with a Gaussian integer modulus, at first a Gaussian integer congruent to a modulo reduction of a given Gaussian integer with the Gaussian integer modulus is determined with the method as described above and subsequently, the Gaussian integer congruent is further reduced with a final reduction. A part of the Montgomery reduction, namely the final part given by the steps 3 to 11 of algorithm 2 in the article: Safieh, Malek; Freudenberger, Jürgen: "Montgomery Reduction for Gaussian Integers", Cryptography 2021, 5, 6 (https://doi.org/10.3390/cryptography5010006), constitutes a known reduction which - in combination with the method for determining a Gaussian integer congruent to a modulo reduction of a given Gaussian integer modulo a complex modulus - results in a computationally efficient reduction of Gaussian integers.

The computer-implemented cryptographic method according to the invention is particularly a method for generating a cryptographic key and/or for encryption or decryption. In the method according to the invention a Gaussian integer congruent to a modulo reduction of a given Gaussian integer with a Gaussian integer modulus is evaluated using a method as described above and/or a reduction of a given Gaussian integer with a complex modulus is evaluated using a method as described above.

In the computer-implemented error-correction method according to the invention, a congruent to a modulo reduction of a Gaussian integer with a Gaussian integer modulus is evaluated using a method as described above and/or a reduction of a Gaussian integer with a Gaussian integer modulus is evaluated using a method as described above.

In the following, embodiments of the invention are described in more detail:

The reduction algorithm is described below as algorithm 1 and contains in steps 1 to 6 the method for determining a congruent to a modulo reduction of a given Gaussian integer with a Gaussian integer modulus according to the invention. This method represents the first part of algorithm 1. The second part of algorithm 1 is constituted by a final reduction to determine the correct representative from the Gaussian integer ring or field as used in the Montgomery method. Part 1 and part 2 together form the method for a desired reduction of a given Gaussian integer with a Gaussian integer modulus according to the invention.

The full reduction algorithm according to algorithm 1 targets Gaussian integer moduli of the form $\pi = \beta^n - \varepsilon$, where $|\varepsilon| < |\beta^n| \le |\pi|$:

```
Algorithm 1: Efficient reduction for a class of given Gaussi-
an integers with π = βⁿ - ε, where ε ≡ βⁿ mod π and |ε| < |βⁿ|
≤ |π|.
The function "div βⁿ" describes a simple integer division by
βⁿ. The simplified shift and truncation operations for β = 2
are applied for the real and imaginary parts separately. Note
that z' - qβⁿ + qε = z' - qπ.
```

```
Input: βⁿ, given Gaussian integer z', and π = βⁿ - ε.
Output: Gaussian integer z = z' mod π.
1:    q = z' div βⁿ        //shift right by n for β = 2
2:    while (q ≠ 0 + 0i) do

3:        z'' = z' - qβⁿ // truncation to n-bits for β = 2

4:        z' = z'' + qε, // replace qβⁿ by qε since |ε| < |βⁿ|
5:        q = z' div βⁿ  // shift right by n for β = 2
6:    end while
7: apply a final reduction using z' for providing z
```

In the first part in step 1 to 6, a Gaussian integer z' is determined, which is congruent to the correct result of the complete or desired ordinary modulo reduction. Since the Gaussian integer base in algorithm 1 is equal to 2, the evaluation of step 5 only requires bit shits into the right direction for the real and the imaginary part. The second part in step 7, also called the final reduction throughout this application, uniquely determines the correct final result, which is the correct representative from the Gaussian integer field or ring, using the final reduction for Gaussian integers as described in steps 3 to 11 of algorithm 2 in Safieh, Malek; Freudenberger, Jürgen: "Montgomery Reduction for Gaussian Integers", Cryptography 2021, 5, 6 as referenced in the previous description.

Several cases, the algorithm 1 may be applied to, are distinguished in the following:

In general, for ordinary Gaussian integer bases $\beta$, here e. g. the ordinary integer $\beta = 2$, step 3 in algorithm 1 involves simply a truncation. Furthermore, the evaluation of the product of the difference $\varepsilon$ of the Gaussian integer base raised to the integer exponent $\beta^n$ and the Gaussian integer modulus $\pi$ and the component-wisely down rounded quotient $q$ of the current value of the variable value candidate $z'$ for the Gaussian integer congruent $z'$ and the Gaussian integer base raised to the integer exponent $\beta^n$, namely the product $q_\varepsilon$ required in step 4 of algorithm 1, involves a complex multiplication which may not induce much computational costs in case the aforementioned difference $\varepsilon$ is comparatively small.

However, in case the aforementioned difference $\varepsilon$ is equal to a sum of a further integer base such as 2 raised to a first superscript $r$ and the product of this further integer base 2 raised to a second superscript $j$ and the imaginary unit, thus, $\varepsilon = 2^r + 2^j i$, and the Gaussian integer base $\beta$ is an integer power of the further integer base 2, step 3 may be evaluated using truncation and $q_\varepsilon$ is calculated with digit shifts, here bit shifts, to the left as described in the algorithm 2 below.

This case is explained in more detail with the first example concerning algorithm 2 below.

Likewise, in case the aforementioned difference $\varepsilon$ is not such a sum of a further integer base raised to a first integer superscript and the further integer base raised to the second integer superscript, and the Gaussian integer base is the sum of the further integer base raised to a third superscript and a product of the further integer base raised to the third superscript and the imaginary unit, step 3 may be performed with applying digit shifts such as bit shifts while step 4 still requires a complex multiplication.

In the particular case, wherein the difference $\varepsilon$ of the Gaussian integer base raised to the integer exponent and the Gaussian integer modulus is the sum of the further integer base raised to a first integer superscript and the further integer base raised to the second integer superscript, and wherein the Gaussian integer base is the sum of the further integer base raised to a third integer superscript and the product of the further integer base raised to the third integer superscript and the imaginary unit, step 3 of algorithm 1 requires digit shifts to obtain the product $q\beta^n$ of the down rounded quotient $q$ of the current value of the variable value candidate for the Gaussian integer congruent and the Gaussian integer base raised to the integer exponent and the Gaussian integer base raised to the integer exponent. In this case, the evaluation of the product $q_\varepsilon$ of the down rounded quotient $q$ of the current value of the variable value candidate for the Gaussian integer congruent and the Gaussian integer base raised to the integer exponent and the difference $\varepsilon$ only requires digit shifts to the left.

This last case is explained with the second example detailed in the embodiment of the second example of algorithm 2 as described below.

The final reduction step of algorithm 1 is costly for the implementation. However, for several applications like cryptography many interim results have to be calculated, for which a congruent solution is sufficient. Hence, for any congruent $z'$ with

$$max(|Re\{z'\}|, |Im\{z'\}|) \leq max(|Re\{\pi\}|, |Im\{\pi\}|)\,,$$

the final reduction in step 7 of this algorithm 1 can be ignored, where $Re\{x\}$ and $Im\{x\}$ denote the real and imaginary parts of the Gaussian integer $x$, respectively. We note that there exist many such Gaussian integers, which are interesting for efficient error-correcting coding, cryptographic or other applications.

The complexity of the new derived first part in step 1 to 6 of this algorithm can be reduced for special forms of Gaussian integer moduli:

In a first example explained with algorithm 2, let the Gaussian integer base $\beta = b$ be an ordinary integer and $\varepsilon = b^r + b^j i$ be a Gaussian integer, where b is a convenient further Gaussian integer base. For $b = 2$, the integer division $z'$**div** $\beta^n$ can be achieved with shifts of the real and imaginary parts of z' by n bits to the right direction, respectively. Similarly, $z'' = z' - q\beta^n$ can be implemented by truncating the real and imaginary parts of z' by n bits, respectively. Due to the used form of $\varepsilon$ the complex multiplication in step 4, i.e. the multiplication $q_\varepsilon$, can be obtained with bit shifts by $r$ and $j$ to the left direction. Consequently, step 1 to 6 of this algorithm can be calculated using truncations, addition, subtraction, and shift operations, which is very efficient for the implementation. This concept is applicable for some Gaussian integer rings and fields, which is not possible for rings and fields over ordinary integers. The resulting reduction is summarized in the algorithm 2 for the Gaussian integer z being an element of the ring or field $\mathcal{G}_p$ of size or order $p$, the order $p$ being the absolute square of the Gaussian integer modulus:

```
Algorithm 2: Efficient reduction for given Gaussian integers
to obtain z′ ≡ z mod π with |Re{z′}|< 2ⁿ and |Im{z′}|< 2ⁿ,
where the given Gaussian integer z ∈ 𝒢ₚ, the Gaussian integer
modulus π = 2ⁿ - (2ʳ + 2ʲi), r and j are positive integers (or
one of them is zero). The function mul(x,2ⁿ) denotes a shift
of x by n bits to the left direction.
```

```
Input: given Gaussian integer z, n, r, and
Output: z′ ≡ z mod π with |Re{z′}|< 2ⁿ, |Im{z′}|< 2ⁿ
1:    Re{q} = Re{z′} div 2ⁿ     // shift right Re{z′} by n
2:    Im{q} = Im{z′} div 2ⁿ     // shift right Im{z′} by n
3:    while (Re{q}≠0 && Im{q}≠0) do
4:          x = Re{z′}&(2ⁿ - 1) // truncate Re{z′} to n-bits
5:          y = Re{z′}&(2ⁿ - 1) // truncate Im{z′} to n-bits
6:          Re{z′} = x + mul(Re{z′}, 2ʳ) - mul(Im{z′}, 2ʲ)
7:          Im{z′} = y + mul(Re{z′}, 2ʲ) + mul(Im{z′}, 2ʳ)
8:          Re{q} = Re{z′} div 2ⁿ     // shift right Re{z′} by n
9:          Im{q} = Im{z′} div 2ⁿ     // shift right Im{z′} by n
10:   end while
11:   return z′
```

After these steps, also a final reduction can be performed.

In a second example, let $\beta = (b^k + b^k i)$ be a Gaussian integer and $\varepsilon$ be an ordinary integer or a Gaussian integer, where $b$ is a convenient basis.

For $b = 2$, step 3 can be implemented using a subtraction and the second term $q\beta^n$ can be achieved with bit shifts to the left direction. Furthermore, the integer division in step 1 and 5 of algorithm 1 can be defined as follows

$$z'\operatorname{div}\beta^n = \left\lfloor \frac{z'\beta^n}{\beta^n(\beta^n)^*} \right\rfloor,$$

where $(\beta^n)^*$ is the complex conjugate of $\beta^n$. Due to the used form of $\beta$ this operation can be implemented with simple bit shifts. Similarly, the complex multiplication $q\beta^n$ in step 3 of algorithm 1 can be implemented with simple bit shifts to the left direction. Hence, the complexity of step 1 to 6 of algorithm 1 is dominated by the complex multiplication $q\varepsilon$. Like in the previous concept, these multiplications provide low complexity for differences of the $\varepsilon$ values with low norm. Furthermore, these multiplication can be implemented with bit shifts to the left direction for $\varepsilon = b^r$ or for $\varepsilon = b^r + b^j i$.

Since the computational costs for the first part of the reduction mainly arise from the multiplication $q\varepsilon$, choosing an $\varepsilon$ with a norm that is much smaller than the Gaussian integer base raised to the integer exponent leads to significantly less computational costs even if $\varepsilon$ does not have the form $\varepsilon = b^r$ or $\varepsilon = b^r + b^j i$. Particularly when choosing this special class of $\varepsilon$, such multiplications may be performed even more efficiently by digit shifts to the left.

**Claims**

1. Computer-implemented method for determining a Gaussian integer congruent to a given Gaussian integer modulo a Gaussian integer modulus, wherein

   - A Gaussian integer base raised to an integer exponent having a norm smaller than or equal to that of the Gaussian integer modulus and larger than the norm of the difference of the Gaussian integer base raised to the integer exponent and the Gaussian integer modulus is considered,
   and wherein a variable value candidate for the Gaussian integer congruent is considered that is

- first initialized with the given Gaussian integer and
- then iteratively decremented by a product of the Gaussian integer modulus and a component-wisely down rounded quotient of the current value of the variable value candidate for the Gaussian integer congruent and the Gaussian integer base raised to the integer exponent, as long as the quotient is not vanishing,

whereafter the resulting variable value candidate for the Gaussian integer congruent is determined as the Gaussian integer congruent.

2. Method according to claim 1, wherein the norm of the determined Gaussian integer congruent is smaller than the norm of the given Gaussian integer.

3. Method according to one of the preceding claims, wherein the norm denotes the absolute value.

4. Method according to claim 1 or 2, wherein the norm denotes the Manhattan weight or the absolute square value.

5. Method according to one of the preceding claims, wherein the method is conducted on a computer that stores numbers in a positional numeral system with a radix, wherein the radix is equal to the integer base number.

6. Method according to one of the preceding claims, wherein the Gaussian integer base is an ordinary integer base and is preferably 2.

7. Method according to one of the preceding claims, wherein the variable value candidate is iteratively decremented involving subtracting a product of the Gaussian integer modulus and the component-wisely down rounded quotient of the current value of variable value candidate and the Gaussian integer base raised to the integer exponent.

8. Method according to one of the preceding claims, wherein the variable value candidate is iteratively decremented involving adding a product of the component-wisely down rounded quotient of the variable value candidate and the Gaussian integer base raised to the integer exponent and the difference of the Gaussian integer base raised to the integer exponent and the Gaussian integer modulus.

9. Method according to one of the preceding claims, wherein the variable value candidate is iteratively decremented involving bit shifting by an integer number of bits that is equal to the integer exponent that the Gaussian integer base is raised to and involving bit truncation down to an integer number of bits that is equal to the integer exponent.

10. Method according to one of the preceding claims, wherein the difference of the Gaussian integer base raised to an integer power and the Gaussian integer modulus is composed of a sum of a first further integer base raised to first superscript and the first further integer baser raised to a second superscript multiplied with the imaginary unit.

11. Method according to one of the preceding claims, wherein the Gaussian integer modulus is a Gaussian integer modulus, where the multiplication of this modulus with its conjugate is a prime ordinary integer.

12. Method according to one of the preceding claims, wherein the Gaussian integer base is the sum of an ordinary integer raised to a third integer superscript, and the product of the imaginary unit with the ordinary integer raised to the third integer superscript.

13. Computer-implemented method for determining a reduction of a given Gaussian integer modulo a Gaussian integer modulus, wherein first a Gaussian integer congruent to a modulo reduction of a given Gaussian integer modulo a Gaussian integer modulus is determined with the method according to one of the preceding claims and the Gaussian integer congruent is further reduced with a final reduction.

14. Computer-implemented cryptographic method, particularly for generating a cryptographic key and/or for encryption or decryption, wherein a Gaussian integer congruent to a modulo reduction of a given Gaussian integer modulo a Gaussian integer modulus is determined using a method according to one of the claims 1 to 12 and/or wherein a reduction of a given Gaussian integer modulo a Gaussian integer modulus is determined using a method according to claim 13.

15. Computer-implemented error-correction method, wherein a congruent to a modulo reduction of a Gaussian integer with a Gaussian integer modulus is determined using a method according to one of the claims 1 to 12 and/or wherein a reduction of a Gaussian integer modulo a Gaussian integer modulus is determined using a method according to claim 13.

**Patentansprüche**

1. Computerimplementiertes Verfahren zum Bestimmen einer Gaußschen Ganzzahl, die mit einer vorgegebenen Gaußschen Ganzzahl modulo eines Gaußschen Ganzzahlmoduls kongruent ist, wobei

   - eine Gaußsche ganzzahlige Basis, die auf einen ganzzahligen Exponenten erhoben wird und eine Norm aufweist, die kleiner oder gleich der des Gaußschen Ganzzahlmoduls ist und größer als die Norm der Differenz der auf den ganzzahligen Exponenten erhobenen Gaußschen ganzzahligen Basis und des Gaußschen Ganzzahlmoduls ist, betrachtet wird und wobei ein Variablenwertkandidat für die Gaußsche ganzzahlige Kongruenz betrachtet wird, der
   - zunächst mit der vorgegebenen Gaußschen Ganzzahl initialisiert wird und
   - dann iterativ dekrementiert wird, indem ein Produkt aus dem Gaußschen Ganzzahlmodul und einem komponentenweise abgerundeten Quotienten aus dem aktuellen Wert des Variablenwertkandidaten und der auf den ganzzahligen Exponenten erhobenen Gaußschen ganzzahligen Basis subtrahiert wird, solange der Quotient nicht verschwindet,

   woraufhin der resultierende Variablenwertkandidat für die Gaußsche ganzzahlige Kongruenz als die Gaußsche ganzzahlige Kongruenz bestimmt wird.

2. Verfahren nach Anspruch 1, wobei die Norm der bestimmten Gaußschen ganzzahligen Kongruenz kleiner ist als die Norm der vorgegebenen Gaußschen Ganzzahl.

3. Verfahren nach einem der vorhergehenden Ansprüche, wobei die Norm den Absolutwert bezeichnet.

4. Verfahren nach Anspruch 1 oder 2, wobei die Norm das Manhattan-Gewicht oder den absoluten Quadratwert bezeichnet.

5. Verfahren nach einem der vorhergehenden Ansprüche, wobei das Verfahren auf einem Computer durchgeführt wird, der Zahlen in einem Stellenwertsystem mit einer Radix speichert, wobei die Radix gleich der ganzzahligen Basiszahl ist.

6. Verfahren nach einem der vorhergehenden Ansprüche, wobei die Gaußsche ganzzahlige Basis eine gewöhnliche ganzzahlige Basis ist und vorzugsweise 2 ist.

7. Verfahren nach einem der vorhergehenden Ansprüche, wobei der Variablenwertkandidat iterativ dekrementiert wird, indem ein Produkt aus dem Gaußschen Ganzzahlmodul und dem komponentenweise abgerundeten Quotienten aus dem aktuellen Wert des Variablenwertkandidaten und der auf den ganzzahligen Exponenten erhobenen Gaußschen ganzzahligen Basis subtrahiert wird.

8. Verfahren nach einem der vorhergehenden Ansprüche, wobei der Variablenwertkandidat iterativ dekrementiert wird, indem ein Produkt aus dem komponentenweise abgerundeten Quotienten des Variablenwertkandidaten und der auf den ganzzahligen Exponenten erhobenen Gaußschen ganzzahligen Basis und der Differenz der auf den ganzzahligen Exponenten erhobenen Gaußschen ganzzahligen Basis und dem Gaußschen Ganzzahlmodul addiert wird.

9. Verfahren nach einem der vorhergehenden Ansprüche, wobei der Variablenwertkandidat iterativ dekrementiert wird, indem eine Bitverschiebung um eine ganzzahlige Anzahl von Bits, die gleich dem ganzzahligen Exponenten ist, auf den die Gaußsche ganzzahlige Basis erhoben wird, durchgeführt wird und eine Bitabschneidung bis zu einer ganzzahligen Anzahl von Bits, die gleich dem ganzzahligen Exponenten ist, durchgeführt wird.

10. Verfahren nach einem der vorhergehenden Ansprüche, wobei die Differenz aus der auf eine ganzzahlige Potenz erhobenen Gaußschen ganzzahligen Basis und dem Gaußschen Ganzzahlmodul aus einer Summe einer ersten weiteren ganzzahligen Basis, die auf eine erste ganzzahlige Potenz erhoben ist, und der ersten weiteren ganzzahligen Basis, die auf eine zweite ganzzahlige Potenz erhoben ist, multipliziert mit der imaginären Einheit, zusammengesetzt ist.

11. Verfahren nach einem der vorhergehenden Ansprüche, wobei der Gaußsche Ganzzahlmodul ein Gaußscher Ganzzahlmodul ist, bei dem die Multiplikation dieses Moduls mit seiner Konjugierten eine primäre gewöhnliche Ganzzahl ist.

12. Verfahren nach einem der vorhergehenden Ansprüche, wobei die Gaußsche ganzzahlige Basis die Summe einer auf eine dritte ganzzahlige Potenz erhobenen gewöhnlichen ganzen Zahl und dem Produkt der imaginären Einheit mit der auf die dritte ganzzahlige Potenz erhobenen gewöhnlichen Ganzzahl ist.

13. Computerimplementiertes Verfahren zur Bestimmung einer Reduktion einer vorgegebenen Gaußschen Ganzzahl modulo eines Gaußschen Ganzzahlmoduls, wobei zunächst eine Gaußsche Ganzzahl, die kongruent mit einer Modulreduktion einer vorgegebenen Gaußschen Ganzzahl modulo eines Gaußschen Ganzzahlmoduls ist, mit dem Verfahren nach einem der vorhergehenden Ansprüche bestimmt wird und die Gaußsche ganzzahlige Kongruenz mit einer abschließenden Reduktion weiter reduziert wird.

14. Computerimplementiertes kryptografisches Verfahren, insbesondere zur Erzeugung eines kryptografischen Schlüssels und/oder zur Verschlüsselung oder Entschlüsselung, wobei eine mit einer Modulreduktion eines vorgegebenen Gaußschen Ganzzahlmoduls kongruente Gaußsche Ganzzahl modulo eines Gaußschen Ganzzahlmoduls unter Verwendung eines Verfahrens nach einem der Ansprüche 1 bis 12 bestimmt wird und/oder wobei eine Reduktion einer vorgegebenen Gaußschen Ganzzahl modulo eines Gaußschen Ganzzahlmoduls unter Verwendung eines Verfahrens nach Anspruch 13 bestimmt wird.

15. Computerimplementiertes Fehlerkorrekturverfahren, wobei eine Kongruenz mit einer Modulreduktion einer Gaußschen Ganzzahl mit einem Gaußschen Ganzzahlmodul unter Verwendung eines Verfahrens nach einem der Ansprüche 1 bis 12 bestimmt wird und/oder wobei eine Reduktion einer Gaußschen Ganzzahl modulo eines Gaußschen Ganzzahlmoduls unter Verwendung eines Verfahrens nach Anspruch 13 bestimmt wird.

**Revendications**

1. Procédé mis en œuvre par ordinateur permettant de déterminer un entier gaussien congru à un entier gaussien donné modulo un module entier gaussien, dans lequel

   - une base d'un entier gaussien élevée à un exposant entier présentant une norme inférieure ou égale à celle du module entier gaussien et supérieure à la norme de la différence de la base d'un entier gaussien élevé à l'exposant entier et du module entier gaussien est considérée, et dans lequel une valeur variable candidate à l'entier gaussien congru est considérée qui est
   - tout d'abord initialisée avec l'entier gaussien donné, et
   - ensuite décrémentée de manière itérative par un produit du module entier gaussien et d'un quotient arrondi à la valeur inférieure à l'échelle du composant de la valeur actuelle de la valeur variable candidate pour l'entier gaussien congru et la base d'entier gaussien élevée à l'exposant entier, aussi longtemps que le quotient n'a pas disparu,

   après quoi la valeur variable candidate en résultant pour le composant entier gaussien est déterminée comme l'entier gaussien congru.

2. Procédé selon la revendication 1, dans lequel la norme de l'entier gaussien congru déterminé est inférieure à la norme de l'entier gaussien donné.

3. Procédé selon l'une des revendications précédentes, dans lequel la norme représente la valeur absolue.

4. Procédé selon la revendication 1 ou 2, dans lequel la norme représente le poids Manhattan ou la valeur carrée absolue.

5. Procédé selon l'une des revendications précédentes, dans lequel le procédé est réalisé sur un ordinateur qui stocke des nombres dans un système numéral positionnel avec un radix, dans lequel le radix est égal au nombre de base entier.

6. Procédé selon l'une des revendications précédentes, dans lequel la base entière gaussienne est une base entière ordinaire et est de préférence égale à 2.

7. Procédé selon l'une des revendications précédentes, dans lequel la valeur variable candidate est décrémentée de manière itérative impliquant la soustraction d'un produit du module entier gaussien et du quotient arrondi à la valeur inférieure à l'échelle du composant de la valeur actuelle de valeur variable candidate et la base entière gaussienne élevée à l'exposant entier.

8. Procédé selon l'une des revendications précédentes, dans lequel la valeur variable candidate est décrémentée de manière itérative en impliquant l'addition d'un produit du quotient arrondi à la valeur inférieure à l'échelle du composant de la valeur variable candidate et de la base entière gaussienne élevée à l'exposant entier et la différence de la base entière gaussienne élevée à l'exposant entier et du module entier gaussien.

9. Procédé selon l'une des revendications précédentes, dans lequel la valeur variable candidate est décrémentée de manière itérative impliquant un déplacement de bits par un nombre entier de bits qui est égal à l'exposant entier auquel la base entière gaussienne est élevée et impliquant une troncation de bits à un nombre entier de bits qui est égal à l'exposant entier.

10. Procédé selon l'une des revendications précédentes, dans lequel la différence de la base entière gaussienne élevée à une puissance entière et du module entier gaussien est composée d'une somme d'une première base entière ultérieure élevée à un premier exposant et de la première base entière ultérieure élevée à un second exposant multipliée par l'unité imaginaire.

11. Procédé selon l'une des revendications précédentes, dans lequel le module entier gaussien est un module entier gaussien dans lequel la multiplication de ce module avec son conjugué est un entier ordinaire premier.

12. Procédé selon l'une des revendications précédentes, dans lequel la base entière gaussienne est la somme d'un entier ordinaire élevé à un troisième exposant entier, et du produit de l'unité imaginaire avec l'entier ordinaire élevé au troisième exposant entier.

13. Procédé mis en œuvre par ordinateur permettant de déterminer une réduction d'un entier gaussien donné modulo un module entier gaussien, dans lequel tout d'abord un entier gaussien congru à une réduction modulo d'un entier gaussien donné modulo un module entier gaussien est déterminé avec le procédé selon l'une des revendications précédentes et l'entier gaussien congru est en outre réduit par une réduction finale.

14. Procédé cryptographique mis en œuvre par ordinateur, en particulier permettant de générer une clé cryptographique et/ou pour le chiffrage ou le déchiffrage, dans lequel un entier gaussien congru à une réduction modulo d'un entier gaussien donné modulo un module entier gaussien est déterminé en utilisant le procédé selon l'une des revendications 1 à 12, et/ou dans lequel une réduction d'un entier gaussien donné modulo un module entier gaussien donné est déterminée en utilisant un procédé selon la revendication 13.

15. Procédé de correction d'erreur mis en œuvre par ordinateur, dans lequel un entier congru à une réduction modulo d'un entier gaussien avec un module entier gaussien est déterminé en utilisant un procédé selon l'une des revendications 1 à 12, et/ou dans lequel une réduction d'un entier gaussien modulo un module entier gaussien est déterminée en utilisant un procédé selon la revendication 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAFIEH, MALEK** ; **FREUDENBERGER, JÜRGEN**. Montgomery Reduction for Gaussian Integers. *Cryptography*, 2021, vol. 5, 6, https://doi.org/10.3390/-cryptography5010006

- **SAFIEH, MALEK** ; **FREUDENBERGER, JÜRGEN**. Montgomery Reduction for Gaussian Integers. *Cryptography*, 2021, vol. 5, 6